# EUROPÄISCHE PATENTSCHRIFT

(11) **EP 2 147 814 B1**
(45) Veröffentlichungstag und Bekanntmachung des Hinweises auf die Patenterteilung: **15.09.2010**
(21) Anmeldenummer: 08013070.1
(22) Anmeldetag: 20.07.2008
(51) Int. Cl.: B60J 7/047

(54) **Öffnungsfähiges Fahrzeugdach mit einem verstellbaren Dachteil**
Automobile roof with an adjustable roof part which can be opened
Toit de véhicule ouvrant doté d'un élément de toit réglable

(43) Veröffentlichungstag der Anmeldung: 27.01.2010
(73) Patentinhaber: Webasto AG, 82131 Stockdorf (DE)
(72) Erfinder: Miklosi, Stefan, 81247 München (DE)
(74) Vertreter: Wiese, Gerhard

(56) Entgegenhaltungen:
- EP-A- 1 535 780
- DE-A1- 3 942 746
- FR-A- 2 904 794
- US-A- 5 092 651
- US-A- 5 632 523

## Beschreibung

Die Erfindung betrifft ein öffnungsfähiges Fahrzeugdach mit einem verstellbaren Dachteil, insbesondere eines Faltverdecks gemäß dem Oberbegriff des Patentanspruchs 1.

Aus der DE 102 03 204 A1 ist ein Faltdach eines Fahrzeugs mit einem vorderen Dachteil bekannt geworden, das mittels eines Viergelenks an einem Lagerschlitten bewegbar gelagert ist, der wiederum an einer dachseitigen Führungsbahn mittels eines Antriebs verschiebbar gelagert ist. Ein vorderer Lenker des Viergelenks ist an einer entlang der Führungsbahn verlaufenden Steuerkulisse geführt, deren Vorderabschnitt einen nach vorne hin abwärts gekrümmten Verlauf aufweist. Bei geschlossenem Faltdach ist das vordere Dachteil in einer abgesenkten Schließstellung angeordnet, da der vordere Lenker durch den abwärts gekrümmten Verlauf der Steuerkulisse nach unten geschwenkt ist. Zum Öffnen des Faltdaches wird der Lagerschlitten mittels des Antriebs entlang der Führungsbahn in Richtung der Offenstellung bewegt, wobei anfangs der vordere Lenker im Steuereingriff an der ansteigenden Steuerkulisse aufwärts verschwenkt wird und somit das vordere Dachteil gegenüber dem Lagerschlitten zwangsläufig angehoben wird. Das weitere Öffnen des Faltdaches bzw. des Dachteils erfolgt durch Verschieben des Lagerschlittens, wobei der vordere Lenker in seine obere Stellung verschwenkt ist und diese im weiteren Verlauf aufgrund der zur Führungsbahn des Lagerschlittens parallel verlaufenden Steuerkulisse beibehält. Das Anheben bzw. Absenken des vorderen Dachteils erfolgt somit zwangsläufig aufgrund der Stellung des Lagerschlittens und des festgelegten Verlaufs der zusätzlich erforderlichen Steuerkulisse und kann nicht beeinflusst werden.

Die WO 2007/054080 A1 offenbart ein Dachteil eines öffnungsfähigen Fahrzeugdaches, das mittels einer Lagereinrichtung an einem Lagerschlitten bewegbar gelagert ist, der an einer Führung des Fahrzeugdaches verschiebbar gelagert und mittels eines Antriebs entlang der Führung verstellbar ist, wobei das Dachteil mittels einer zusätzlichen steuerbaren Stelleinrichtung relativ zum Lagerschlitten verstellbar ist und die Stelleinrichtung insbesondere einen eigenen Stellantrieb aufweist oder vom Antrieb des Lagerschlittens mittels eines steuerbaren Stellgetriebes betätigbar ist.

Aus der EP 1 123 220 B1 ist ein Fahrzeug mit einem Faltverdeck bekannt geworden, das an seitlichen Dachholmen verschiebbar gelagert und in eine heckseitige Ablagestellung bewegbar ist, wobei die Dachspitze als einfacher Querspriegel ohne Hub- oder Schwenkbewegung gebildet ist. Bei geöffnetem und entnommenem Faltverdeck können auch die lösbar angebrachten Dachholme entnommen werden.

Aus der älteren nicht vorveröffentlichten deutschen Patentanmeldung
DE 10 2007 047 457.3 ist eine Mechanik zur Betätigung einer Dachspitze eines Cabriolet-Verdecks bekannt, bei der zwei Hebel einer Viergelenk-Mechanik mit ihren unteren Gelenkpunkten an zwei relativ zueinander bewegbaren Schlitten angelenkt sind. Die beiden Schlitten werden mittels eines senkrecht zur Verschieberichtung bewegbaren Riegelsteins in einer bestimmten Bewegungsphase der Dachspitze miteinander gekoppelt, während in einer anderen Bewegungsphase der Riegelstein den hinteren Schlitten durch Eintreten in eine Aussparung an der Führungsschiene mit dieser koppelt und gleichzeitig vom vorderen Schlitten entkoppelt. In dieser Phase findet eine Relativbewegung beider Schlitten statt, die eine Veränderung des Ausstellwinkels der Dachspitze bewirkt. Die Aussparung an der Führungsschiene ist an einem festen Punkt vorgesehen. Eine weitere Verschiebung der Dachspitze ist nach Kopplung des Riegelsteins mit der Aussparung an der Führungsschiene nicht mehr möglich.

Aufgabe der Erfindung ist es, ein öffnungsfähiges Fahrzeugdach mit einem verstellbaren Dachteil zu schaffen, das eine verbesserte Verstellbarkeit aufweist.

Diese Aufgabe wird bei dem oben genannten Fahrzeugdach erfindungsgemäß durch die Merkmale des Patentanspruchs 1 gelöst. Dadurch, dass das Riegelelement in verschiedenen Bewegungsphasen zum einen mit einem ersten Eingriffelement mit der Führungsschiene und zum anderen mit einem zweiten Eingriffelement mit zwei unterschiedlichen Eingriffelementen am anderen Schlitten in Eingriff bringbar ist, kann die Veränderung des Anstellwinkels des Dachteils an einer beliebigen Position des Verschiebeweges erfolgen, an der das entsprechende Eingriffelement an der Führungsschiene angeordnet ist und es kann nach einer Veränderung des Anstellwinkels eine weitere synchrone Bewegung der beiden die Viergelenkmechanik tragenden Schlitten erfolgen. Durch die Erfindung wird somit eine wesentlich größere Gestaltungsfreiheit für die Bewegung der Dachspitze, insbesondere für die Einstellung von deren Neigungswinkel bezüglich der Führungsschiene, erreicht.

Vorteilhafte Ausgestaltungen der Erfindung sind in den Unteransprüchen angegeben.

Bei diesem Dachteil, insbesondere einer Dachspitze eines Faltverdecks oder eines Cabriolet-Verdecks, kann somit bei der Bewegung der Dachspitze in die hintere Ablagestellung ohne zusätzlichen Antriebsaufwand oder eine zusätzlich über die gesamte Länge der Führungen erforderliche Steuerkulisse an einer bestimmten Stelle oder in einem bestimmten Bereich der Führung die Neigungswinkelveränderung bzw. das Ausschwenken der Dachspitze vorgenommen werden. Durch das Ausschwenken kann die Dachspitze in eine günstige Ablagestellung gebracht werden, in der sie, wenn sie z. B. in einer vollständigen Öffnungsposition im hinteren Bereich des Daches oder auf der Höhe der Gürtellinie des Fahrzeugs angeordnet ist, stärker gegen die Horizontale geschwenkt ist und damit die Sicht nach hinten aus dem Fahrzeug weniger behindert und gleichzeitig dem gefalteten Verdeckstoff des Faltverdecks bzw. Cabriolet-Verdecks ausreichend Ablageraum überlassen kann.

Vorzugsweise ist das Führungsschienenseitige Eingriffelement an einem an der Führung angeordneten Anschlagelement ausgebildet. Das Anschlagelement definiert den Übergabepunkt zwischen einer ersten und dritten Bewegungsphase, in denen die beiden Schlitten miteinander gekoppelt synchron bewegt werden und einer zweiten Bewegungsphase, in der der hintere zweite Schlitten mit dem Eingriffelement an der Führung gekoppelt ist und in der eine Relativbewegung beider Schlitten zur Veränderung des Anstellwinkels des Dachteils erfolgt.

Das Anschlagelement ist vorzugsweise in eine Aussparung an der Führung einsetzbar, wobei die Stelle, an der die Aussparung an der Führung ausgebildet ist, je nach gewünschtem kinematischen Bewegungsablauf und auch bei unterschiedlichen Fahrzeugtypen an unterschiedlicher Stelle positioniert sein kann. Die Mechanik ist dadurch in einfacher Weise an unterschiedliche Dächer anpassbar und kann somit vorteilhaft mit einer großen Zahl von Gleichteilen in großen Stückzahlen hergestellt werden.

Das Riegelelement wird bevorzugt von einem schwenkbar am hinteren zweiten Schlitten angelenkten Bauteil gebildet, das in seinem vorderen Bereich an seiner Oberseite ein erstes trapezförmiges Eingriffelement für den Eingriff mit der Aufnahme an der Führungsschiene und an seiner Unterseite ein zweites trapezförmiges Eingriffelement für den Eingriff mit den beiden Aufnahmen am Antriebsschlitten aufweist.

Zur Steuerung eines besonders exakten Übergangs der Bewegungsphasen ist bevorzugt am zweiten der beiden Schlitten eine Steuerwippe schwenkbar angeordnet, die mit einer vorderen Anschlagfläche mit einer vorderen Anschlagfläche am Führungsschienenseitigen Anschlagelement und mit einer hinteren Anschlagfläche mit einer hinteren Anschlagfläche am Führungsschienenseitigen Anschlagelement zusammenwirkt und diese in bestimmten Bewegungsphasen des Dachteils übergreift. Die Steuerwippe wird bevorzugt mittels eines am ersten der beiden Schlitten angeordneten Steuerbolzens betätigt, der mit einer Steuerkurve an der Steuerwippe in Eingriff steht. Durch diese Anordnung wird während der Relativbewegung beider Schlitten die exakte Kopplung des Riegelelements mit der Aussparung der Führungsschiene beziehungsweise die Entkoppelung des Riegelelements von der Aussparung der Führungsschiene zusätzlich gesichert.

Vorzugsweise enthält die Lagereinrichtung zwei Hebel in Viergelenkanordnung, wobei die führungsseitige Schwenkachse des ersten Hebels am ersten der beiden Schlitten und die führungsseitige Schwenkachse des zweiten Hebels am zweiten der beiden Schlitten angelenkt ist. Grundsätzlich können jedoch auch Hebelanordnungen in Mehrgelenkanordnungen mit mehr als vier Gelenken vorgesehen sein.

Das Dachteil wird bevorzugt von einem Frontspriegel oder einer Dachspitze eines Faltverdecks oder eines Cabriolet-Verdecks gebildet. Die dachseitigen Führungen können an festen oder an bewegbaren oder an entnehmbaren Dachholmen des Fahrzeugs angeordnet sein.

Nachfolgend werden Ausführungsbeispiele des erfindungsgemäßen Fahrzeugdachs unter Bezugnahme auf die Zeichnung näher erläutert. Es zeigt:
- Fig. 1: in einer Seitenansicht in Teildarstellung ein Fahrzeug mit einem Faltverdeck, dessen bewegbare Dachspitze in Schließstellung an einem Windlauf anliegt;

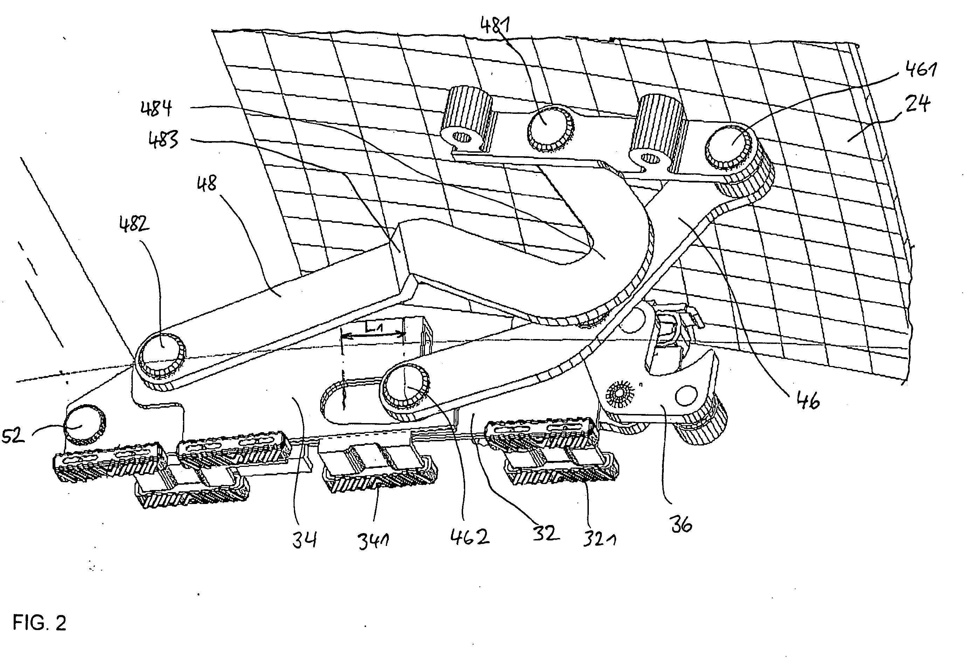

- Fig. 2: in einer perspektivischen Ansicht von innen und von schräg unten die Dachspitze der Fig. 1 und deren Betätigungsmechanik auf der linken Fahrzeugseite in vergrößerter Teildarstellung;

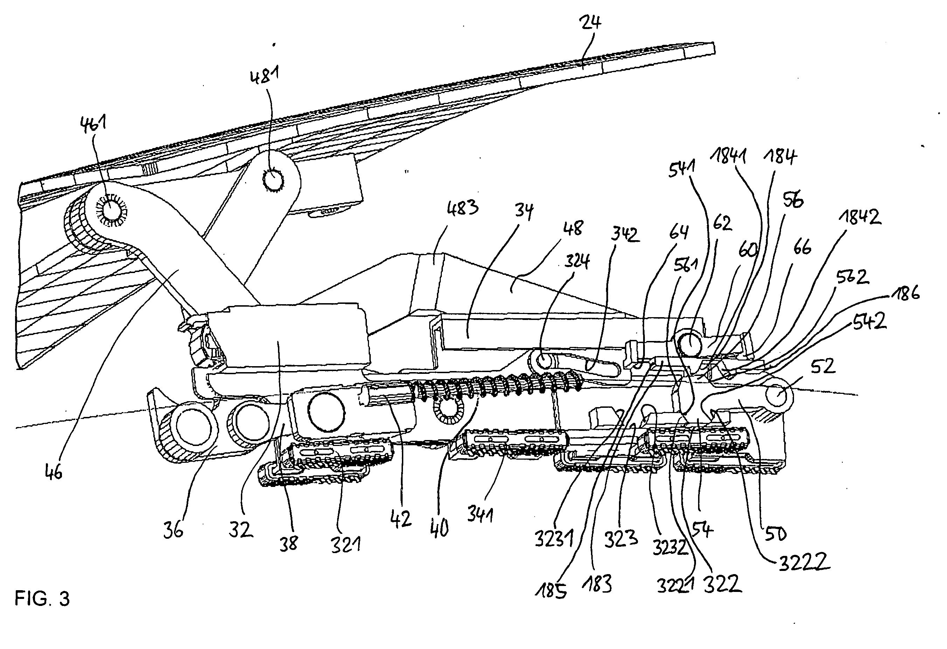

- Fig. 3: in einer perspektivischen Ansicht von außen und von schräg unten die Dachspitze der Fig. 1 und deren Betätigungsmechanik auf der linken Fahrzeugseite in vergrößerter Teildarstellung;

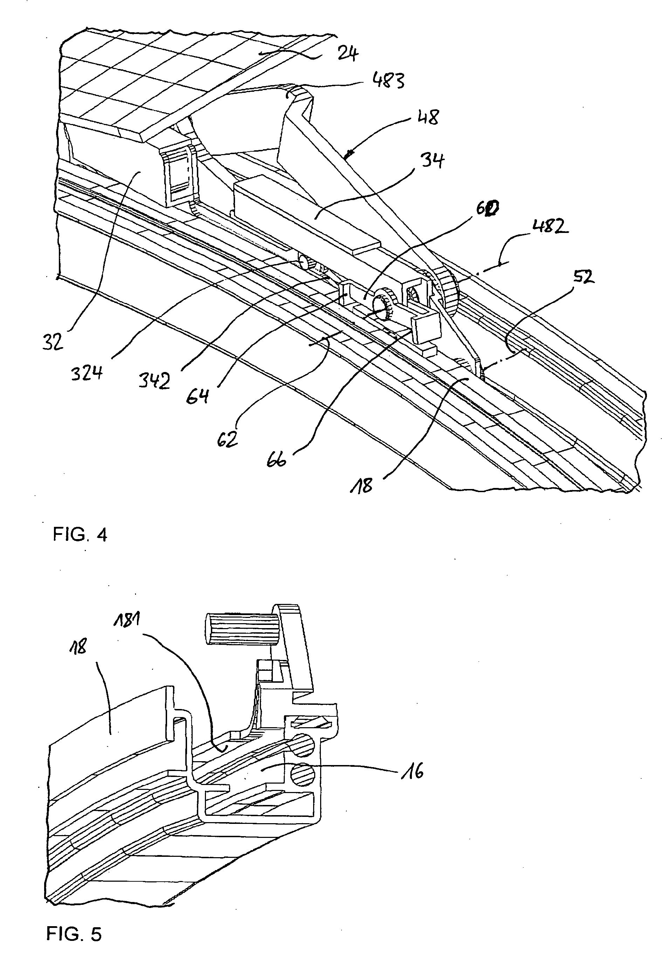

- Fig. 4: in einer perspektivischen Ansicht von außen und von schräg oben die Dachspitze der Fig. 1 und deren Betätigungsmechanik auf der rechten Fahrzeugseite in vergrößerter Teildarstellung;
- Fig. 5: eine perspektivische Schnittansicht auf eine Führungsschiene von schräg unten;

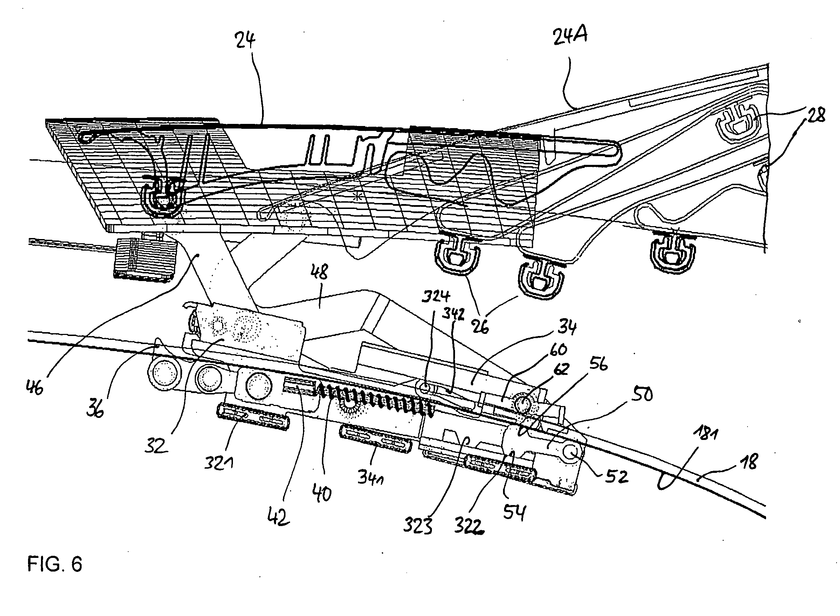

- Fig. 6: in einer Seitenansicht von außen die Dachspitze gemäß Fig. 1 und deren Betätigungsmechanik auf der linken Fahrzeugseite in vergrößerter Teildarstellung in einer ersten Bewegungsphase beim Öffnen;
- Fig. 7: in einer Seitenansicht von außen die Dachspitze gemäß Fig. 1 und deren Betätigungsmechanik auf der linken Fahrzeugseite in vergrößerter Teildarstellung in einer zweiten Bewegungsphase beim Öffnen;
- Fig. 8: in einer Seitenansicht von außen die Dachspitze gemäß Fig. 1 und deren Betätigungsmechanik auf der linken Fahrzeugseite in vergrößerter Teildarstellung in einer dritten Bewegungsphase beim Öffnen;
- Fig. 9: in einer Seitenansicht von außen die Dachspitze gemäß Fig. 1 und deren Betätigungsmechanik auf der linken Fahrzeugseite in vergrößerter Teildarstellung in einer vierten Bewegungsphase beim Öffnen;

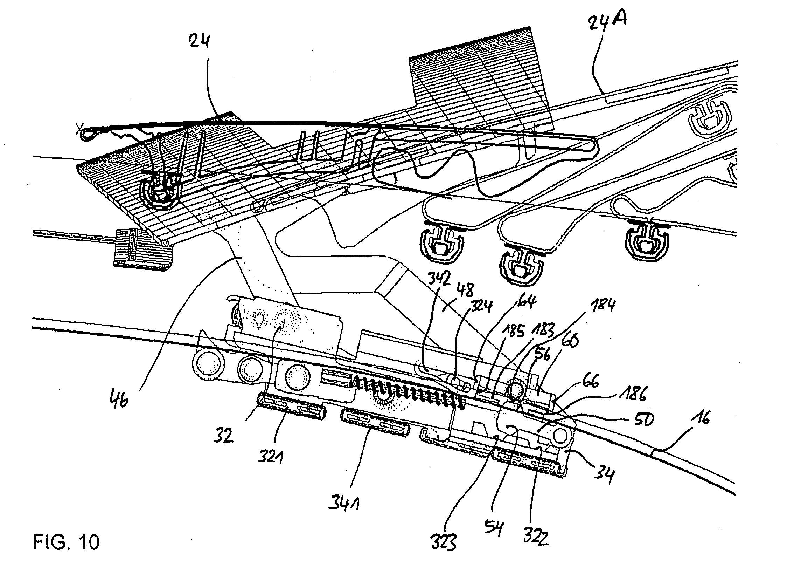

- Fig. 10: in einer Seitenansicht von außen die Dachspitze gemäß Fig. 1 und deren Betätigungsmechanik auf der linken Fahrzeugseite in vergrößerter Teildarstellung in einer fünften Bewegungsphase beim Öffnen;

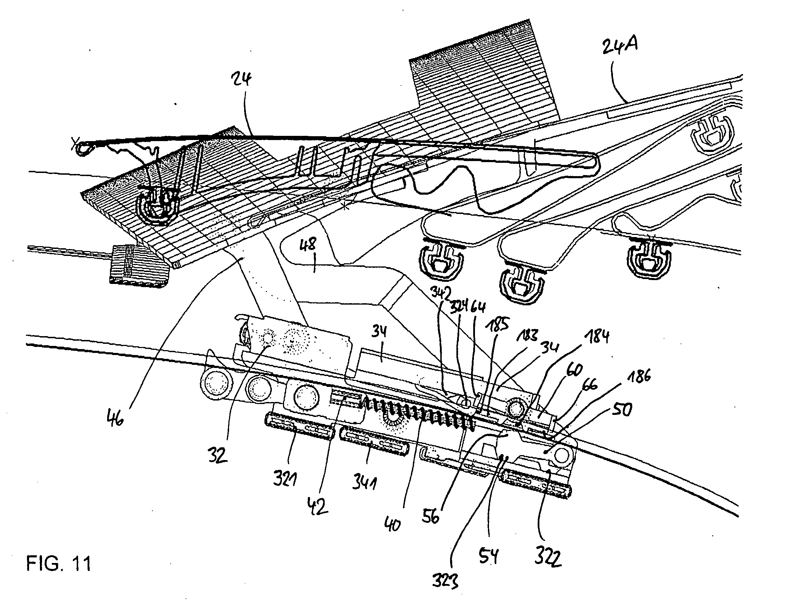

- Fig. 11: in einer Seitenansicht von außen die Dachspitze gemäß Fig. 1 und deren Betätigungsmechanik auf der linken Fahrzeugseite in vergrößerter Teildarstellung in einer sechsten Bewegungsphase beim Öffnen;
- Fig. 12: in einer Seitenansicht von außen die Dachspitze gemäß Fig. 1 und deren Betätigungsmechanik auf der linken Fahrzeugseite in vergrößerter Teildarstellung in einer siebten und letzten Bewegungsphase beim Öffnen (Faltdach vollständig geöffnet);
- Fig. 13: in einer Seitenansicht von außen die Verriegelungsteile der Betätigungsmechanik auf der linken Fahrzeugseite in vergrößerter Teildarstellung in der siebten Bewegungsphase gemäß Fig. 12 beim Schließen;
- Fig. 14: in einer Seitenansicht von außen die Verriegelungsteile der Betätigungsmechanik auf der linken Fahrzeugseite in vergrößerter Teildarstellung in der fünften Bewegungsphase gemäß Fig. 10 beim Schließen;
- Fig. 15: in einer Seitenansicht von außen die Verriegelungsteile der Betätigungsmechanik auf der linken Fahrzeugseite in vergrößerter Teildarstellung in der vierten Bewegungsphase gemäß Fig. 9 beim Schließen;
- Fig. 16: in einer Seitenansicht von außen die Verriegelungsteile der Betätigungsmechanik auf der linken Fahrzeugseite in vergrößerter Teildarstellung in der dritten Bewegungsphase gemäß Fig. 8 beim Schließen;
- Fig. 17: in einer Seitenansicht von außen die Verriegelungsteile der Betätigungsmechanik auf der linken Fahrzeugseite in vergrößerter Teildarstellung in der zweiten Bewegungsphase gemäß Fig. 7 beim Schließen;
- Fig. 18: in einer Seitenansicht von außen die Verriegelungsteile der Betätigungsmechanik auf der linken Fahrzeugseite in vergrößerter Teildarstellung in der ersten Bewegungsphase gemäß Fig. 6 beim Schließen;

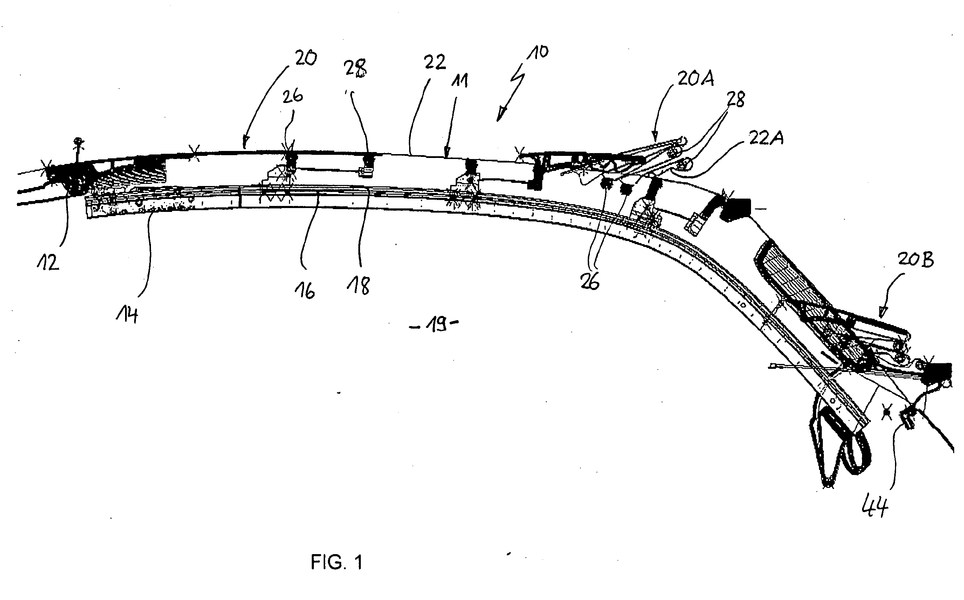

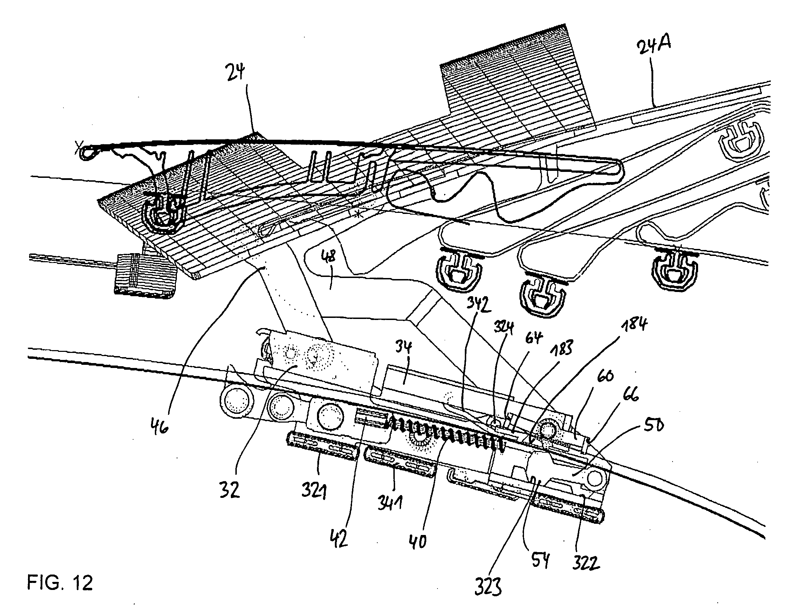

Ein Fahrzeug 10, wie z. B. ein viersitziger Personenkraftwagen, wird von einem Fahrzeugdach 11 nach oben begrenzt. Das Fahrzeugdach 11 enthält ein Faltverdeck 20, das an seitlichen Dachholmen 14 bzw. an dort angeordneten Führungen 16 verschiebbar gelagert ist und in bekannter Weise zwischen einer einen Fahrzeuginnenraum 19 überdeckenden Schließstellung (siehe Fig. 1) und einer den Fahrzeuginnenraum 19 freigebenden Offen- oder Ablagestellung, in der es eine heckseitige Ablagestellung einnimmt (siehe Figur 1 bei 20A und Fig. 12), verstellbar ist.

Ein Fahrzeug mit einem derartigen Faltverdeck ist z. B. in der EP 1 123 220 B1 offenbart, wobei die Dachholme 14 ein fester Bestandteil der Fahrzeugkarosserie, beispielsweise auch Teil der C-Säulen sein können oder diese bilden, oder auch an der Karosserie bewegbar gelagert und z. B. in eine Ablageposition verstellt werden können oder bei in Ablagestellung angeordnetem Faltverdeck vom Fahrzeug entnommen werden können. Beispiele für Fahrzeuge mit Faltverdecken mit ablegbaren Holmen oder Gestängen zeigen die DE 42 03 228 A1 und die DE 101 02 643 A1. Ein Fahrzeugdach mit einem Faltverdeck und entnehmbaren Seitenholmen ist in der DE 199 27 234 C1 offenbart.

Das Faltverdeck 20 enthält einen flexiblen Verdeckstoff 22, der von Querspriegeln 26 gehalten ist, die beidseits an Führungen 16 verschiebbar gelagert sind, die an den beiden Dachholmen 3 ausgebildet oder angebracht sind. Die Führungen 16 sind beispielsweise Führungsschienen 18, die an den Innenseiten der Dachholme 14 angeordnet sind und bevorzugt parallel zueinander verlaufen, wohingegen die Dachholme 14 auch nicht parallel, beispielsweise in Anpassung an die Dachkontur auch gekrümmt verlaufen können. Das Faltverdeck 20 ist zusätzlich zu den auch beim Öffnen in den Führungen 16 verbleibenden Querspriegeln 26 mit Zwischenspriegeln 28 versehen, die aus den Führungen 16 austreten können und sich im geöffneten Zustand (siehe Bezugszahl 20A in Figur 1) jeweils am oberen Ende der Falten des Faltverdecks 20 befinden.

Eine Dachspitze 24 des Faltverdecks 20, die im Ausführungsbeispiel das bewegbare Dachteil gemäß den Patentansprüchen bildet, ist von einem im Wesentlichen als flächige Schale gestalteten Frontspriegel gebildet und mit dem Verdeckstoff 22 verbunden und/oder mit diesem überspannt. Bei geschlossenem Faltverdeck 20 liegt die Dachspitze 24 an einem Windlauf 12 bzw. einer daran angebrachten Dichtung oberhalb der Frontscheibe an (Fig. 1) und bei vollständig geöffnetem bzw. abgelegtem Faltverdeck 20 befindet sie sich in der in Figur 1 bei 20A bzw. in Fig. 12 dargestellten ausgeschwenkten Ablagestellung.

Die Dachspitze 24 ist beidseits jeweils mittels einer Mechanik 30 an der Führungsschiene 18 verschiebbar gelagert. Die Mechanik 30 umfasst einen vorderen Hebel, der im Folgenden als Antriebslenker 46 bezeichnet wird und einen hinteren Hebel, der im Folgenden als Steuerlenker 48 bezeichnet wird. Der Antriebslenker 46 ist mittels einer Schwenkachse 461 im vorderen Bereich der Dachspitze 24 an deren Unterseite schwenkbar angelenkt. Der Antriebslenker 46 ist ferner mittels einer Schwenkachse 462 an einem ersten vorderen Schlitten schwenkbar angelenkt, der im Folgenden als Antriebsschlitten 32 bezeichnet ist.

Der Steuerlenker 48 ist mit einer ersten Schwenkachse 481 ebenfalls an der Unterseite der Dachspitze 24 schwenkbar angelenkt, wobei sich die Schwenkachse 481 hinter der Schwenkachse 461 des Antriebslenkers befindet. Der Steuerlenker 48 ist ferner mit einer zweiten Schwenkachse 482 an einem zweiten hinteren Schlitten schwenkbar angelenkt, der im Folgenden als Steuerschlitten 34 bezeichnet wird. Der Steuerlenker 48 ist im mittleren Bereich mit einer seitlichen Kröpfung 483 versehen und weist in seinem vorderen Bereich einer Hakenform 484 auf, derart, dass der untere Teil des Steuerlenkers 48 nach vorne und der obere Teil des Steuerlenkers 48 nach hinten verläuft.

Der Antriebsschlitten 32 ist an Gleitelementen 321 und der Steuerschlitten 34 ist an Gleitelementen 341 in der Führungsschiene 18 verschiebbar geführt. Der Antriebsschlitten 32 und der Steuerschlitten 34 sind zusätzlich für eine Relativbewegung zueinander auch aneinander verschiebbar geführt. Antriebsschlitten 32 und Steuerschlitten 34 bilden ebenfalls Teile der Mechanik 30.

In einer Führungsbahn der Führungsschiene 18 ist in Fahrtrichtung vor dem Antriebsschlitten 32 ein Gleitelement einer Kabelanbindung 42 aufgenommen. Mit dieser Kabelanbindung 42 ist der Antriebslenker 46 über einen bevorzugt als Kniehebellenker 38 ausgebildeten Zwischenlenker und einen Verriegelungshaken 36 gelenkig verbunden, der in Schließstellung des Faltverdecks 20 in eine Riegelstellung an einem karosseriefesten Verriegelungsbolzen (nicht dargestellt) geschwenkt ist. Der Verriegelungshaken 36 ist mit dem Antriebslenker 46 derart gekoppelt, dass zu Beginn einer Bewegung des Antriebsschlittens 32 aus der Schließstellung nach hinten der Verriegelungshaken 36 in einer den Verriegelungsbolzen freigebenden Bewegung nach unten geschwenkt und der Antriebslenker 46 und damit die Dachspitze 24 nach oben geschwenkt wird. Wegen der Details der Verriegelung der Dachspitze in Schließstellung wird auf die bereits eingangs erwähnte ältere deutsche Patentanmeldung DE 10 2007 047 457.3 verwiesen, deren Offenbarungsgehalt hiermit auch zum Gegenstand der vorliegenden Anmeldung gemacht wird. Die Kabelanbindung 42 ist mit einem Antriebskabel 40 verbunden, das zug- und druckfest in Kabelkanälen der Führungsschienen 18 geführt mit einem elektrischen Antrieb 44 in Antriebsverbindung steht.

Der Antriebsschlitten 32 erstreckt sich nach hinten und weist im hinteren unteren Teil zwei hintereinander beabstandet voneinander angeordnete, nach oben offene trapezförmige Aufnahmen 323 und 322 auf. Die vordere Aufnahme 323 weist im vorderen Bereich eine von vorn nach hinten schräg abfallende Anlaufschräge 3231 und im hinteren Bereich eine von vorn nach hinten schräg ansteigende Anlaufschräge 3232 auf. Die hintere Aufnahme 322 weist im vorderen Bereich eine von vorn nach hinten schräg abfallenden Anlaufschräge 3221 und im hinteren Bereich eine von vorn nach hinten schräg ansteigende Anlaufschräge 3222 auf. Zwischen dem hinteren Ende der vorderen Aufnahme 323 und dem vorderen Ende der hinteren Aufnahme 322 ist eine Gleitfläche 325 ausgebildet.
Ein Stück vor dem Beginn der vorderen Aufnahme 323 ist im oberen Bereich des Antriebsschlittens 32 ein Steuerbolzen 324 angeordnet.

Der hinter dem Antriebsschlitten 32 angeordnete Steuerschlitten 34 ist mit vorderen Gleitelementen 341 und hinteren Gleitelementen 341 in der Führungsschiene 18 geführt. Im hinteren Bereich des Steuerschlittens 34 ist mittels einer Schwenkachse 52 ein von der Schwenkachse in etwa horizontal nach vorne weisendes Riegelelement 50 schwenkbar gelagert. Das Riegelelement 50 weist an seinem vorderen Ende im unteren Bereich ein trapezförmiges unteres Riegelteil 54 und gegenüberliegend in seinem oberen Bereich ein trapezförmiges oberes Riegelteil 56 auf. Das untere Riegelteil 54 ist im vorderen Bereich mit einer von vorn nach hinten schräg abfallenden Anlaufschräge 541 und in seinem hinteren Bereich mit einer von vorn nach hinten schräg ansteigenden Anlaufschräge 542 versehen. Das obere Riegelteil 56 ist im vorderen Bereich mit einer von vorn nach hinten schräg ansteigenden Anlaufschräge 561 und im hinteren Bereich mit einer von vorn nach hinten schräg abfallenden Anlaufschräge 562 versehen.

Das untere Riegelteil 54 ist in seiner Form komplementär zur Form der Aufnahmen 322 beziehungsweise 323 des Antriebsschlittens 32 ausgebildet und kann während der Übergangsbewegung zwischen der vorderen Aufnahme 323 und der hinteren Aufnahme 322 auf der Gleitfläche 325 gleiten.

In eine Aussparung 182 einer oberen Führungsbahn 181 der Führungsschiene 18 ist ein Anschlagelement 183 eingesetzt. Das Anschlagelement 183 weist in seinem mittleren Bereich eine nach unten offene trapezförmige Aufnahme 184 auf. Die Aufnahme 184 ist im vorderen Bereich mit einer von vorn nach hinten schräg ansteigenden Anlaufschräge 1841 und im hinteren Bereich mit einer von vorn nach hinten schräg abfallenden Anlaufschräge 1842 versehen. Die Aufnahme 184 ist komplementär zur Form des oberen Riegelteils 56 ausgebildet. Der Übergang der vorderen Anlaufschräge 1841 zu einer Führungsfläche der Führungsschiene 18 wird von einem vorderen Gleithöcker 187 gebildet. Der Übergang der hinteren Anlaufschräge 1842 zu der Führungsfläche der Führungsschiene 18, wird von einem hinteren Gleithöcker 188 gebildet. Das Anschlagelement 183 weist ferner an seiner Vorderseite eine Anschlagfläche 185 und an seiner Hinterseite eine Anschlagfläche 186 auf.

Im hinteren oberen Bereich des Steuerschlittens 34 ist mittels einer Schwenkachse 62 eine Steuerwippe 60 schwenkbar gelagert. Die Steuerwippe 60 weist eine vordere Anschlagfläche 64 für ein Zusammenwirken mit der vorderen Anschlagfläche 185 des Anschlagelements 183 und eine hintere Anschlagfläche 66 für ein Zusammenwirken mit der hinteren Anschlagfläche 186 des Anschlagelements 183 auf. Der Abstand in Längsrichtung zwischen vorderer Anschlagfläche 64 und hinterer Anschlagfläche 66 der Steuerwippe 60 ist so gewählt, dass die Steuerwippe 60 das Anschlagelement 183 mit knappem Spiel übergreifen kann. Die Steuerwippe 60 ist in einem nach vorne weisenden Bereich mit einer Steuerkurve 68 versehen, in welche der Steuerbolzen 324 des Antriebsschlittens 32 eingreift. Die Steuerkurve 68 weist im vorderen und im hinteren Bereich jeweils einen in etwa horizontalen Abschnitt und dazwischen liegend einen schräg nach hinten abfallenden Abschnitt auf. Bei einer Relativbewegung des Antriebsschlittens 32 und des Steuerschlittens 34 zueinander gleitet der Steuerbolzen 324 durch die Steuerkurve 68 und betätigt dabei die Steuerwippe 60 um deren Schwenkachse 62 in Form einer leichten Schwenkbewegung, die geeignet ist die Anschlagflächen 64 und 185 bzw. 66 und 186 in Eingriff beziehungsweise außer Eingriff zu bringen.

Nachfolgend ist der Bewegungsablauf des erfindungsgemäßen öffnungsfähigen Fahrzeugdachs von der Schließposition in die Öffnungsposition beschrieben.

Bei der Bewegung aus der in Figur 1 gezeigten Schließposition in die in Figur 12 gezeigt Öffnungsposition bewegt der Antrieb 44 das Antriebskabel 40 und somit auch die Kabelanbindung 42 längs der Führungsschiene 18 nach hinten. Dabei erfolgt im vorderen Bereich zunächst eine Schwenkbewegung des Verriegelungshakens 36 nach unten, durch welche dieser seinen Eingriff mit dem nicht gezeigten fahrzeugfesten Verriegelungsbolzen freigibt. Gekoppelt mit dieser Schwenkbewegung des Verriegelungshakens 36 erfolgt eine Ausstellbewegung des Antriebslenkers 46. Durch die dabei erfolgende Ausstellbewegung der Dachspitze 24 mit ihrer Hinterkante nach oben wird auch der hintere Steuerlenker 48 mit nach oben ausgestellt. In dieser ersten Bewegungsphase sind der Antriebsschlitten 32 und der Steuerschlitten 34 durch den Eingriff des unteren Riegelelements 54 in die hintere Aufnahme 322 gekoppelt, so dass mittels des Antriebskabels 40 Antriebsschlitten 32 und Steuerschlitten 34 synchron nach hinten bewegt werden. Der anfangs durch die Schwenkbewegungen des Antriebslenkers 46 und des Steuerlenkers 48 eingestellte Ausstellwinkel der Dachspitze 24 bleibt dadurch in der ersten Bewegungsphase der Dachspitze 24 nach hinten unverändert. Der Steuerbolzen 324 liegt in dieser ersten Bewegungsphase am vorderen Ende der Steuerkurve 68. Die Steuerwippe 60 ist dabei leicht nach vorne gekippt, so dass deren vordere Anschlagfläche 64 in Bereitschaft für ein Zusammenwirken mit der vorderen Anschlagfläche 185 des Anschlagelements 183 ist. Das obere Riegelteil 54 liegt mit einer zwischen den Anlaufschrägen 541 und 542 ausgebildeten Gleitfläche am vorderen Gleithöcker 187 an, so dass das Riegelelement 50 in sicherem Eingriff mit der hinteren Aufnahme 322 gehalten wird.

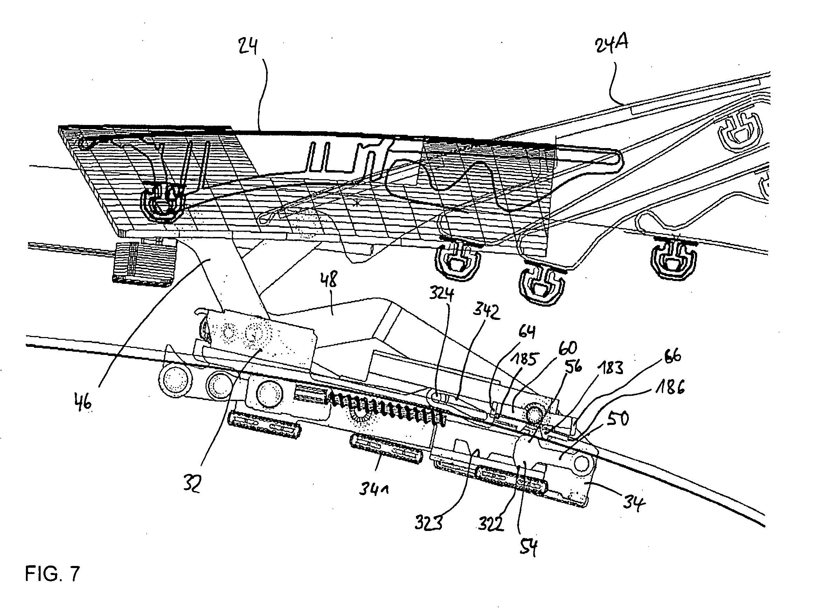

Wenn beim weiteren Verfahren nach hinten die Riegelwippe mit ihrer vorderen Anschlagfläche 64 an der vorderen Anschlagfläche 185 des Anschlagelements 183 anschlägt, beginnt eine zweite Bewegungsphase, in der der Antriebsschlitten 32 eine Relativbewegung zum Steuerschlitten 34 ausführt. Beim Anschlag der vorderen Anschlagfläche 64 an der vorderen Anschlagfläche 185 des Anschlagelements 183 steht die Aufnahme 184 des Anschlagelements 183 exakt über dem oberen Riegelteil 56 des Riegelelements 50 (Figur 7). Der Steuerschlitten 34 wird durch den Anschlag der vorderen Anschlagfläche 64 an der vorderen Anschlagfläche 185 des Führungsschienenfesten Anschlagelements 183 zunächst festgehalten und an einer weiteren Bewegung nach hinten gehindert.

Durch das weitere Verschieben des Antriebsschlittens 32 drückt die vordere Anlaufschräge 3221 der hinteren Aufnahme 322 gegen die vordere Anlaufschräge 541 des unteren Riegelteils 54. Das Riegelelement 50 wird dadurch nach oben geschwenkt, wodurch das untere Riegelteil 54 außer Eingriff mit der hinteren Aufnahme 322 und das obere Riegelteil 56 in Eingriff mit der Führungsschienenfesten Aufnahme 184 gerät. Dadurch wird der Steuerschlitten 34 für die nun folgende Bewegungsphase, in der eine Relativbewegung des Antriebsschlittens 32 zum Steuerschlitten 34 erfolgt, mit der Führungsschiene 18 gekoppelt.

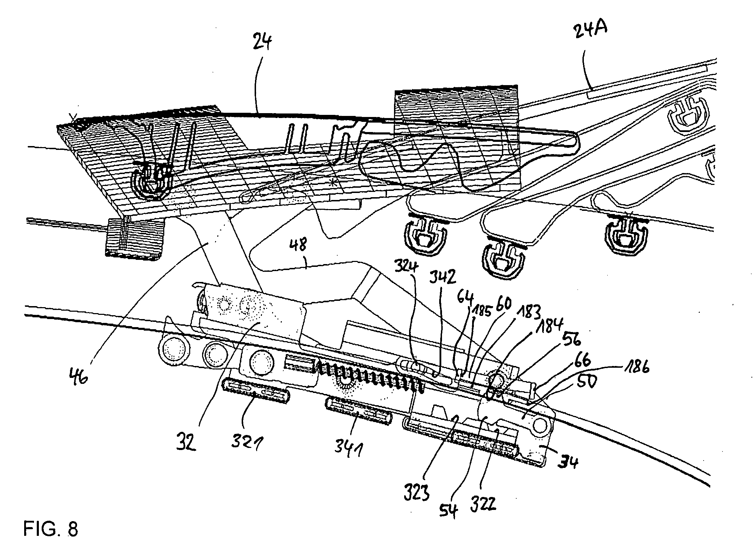

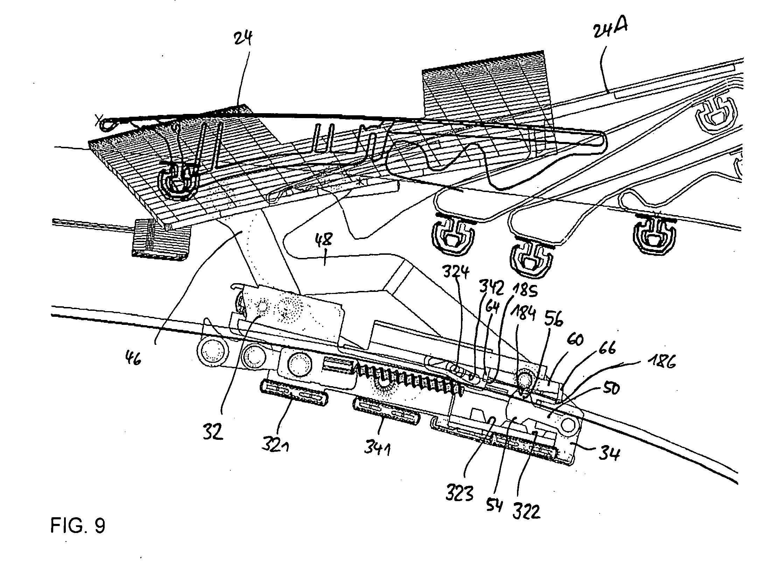

Bei der weiteren Bewegung des Antriebsschlittens 32 nach hinten gleitet das untere Riegelteil 54 mit seiner zwischen den Anlaufschrägen 541 und 542 gelegenen Gleitfläche auf der Gleitfläche 325 (Figur 8). Gleichzeitig bewegt sich der Steuerbolzen 324 in der Steuerkurve 68 nach vorne (Fig. 9). Dabei wird die Steuerwippe 60 langsam an ihrem der Schwenkachse 62 vorgelagerten Teil angehoben.

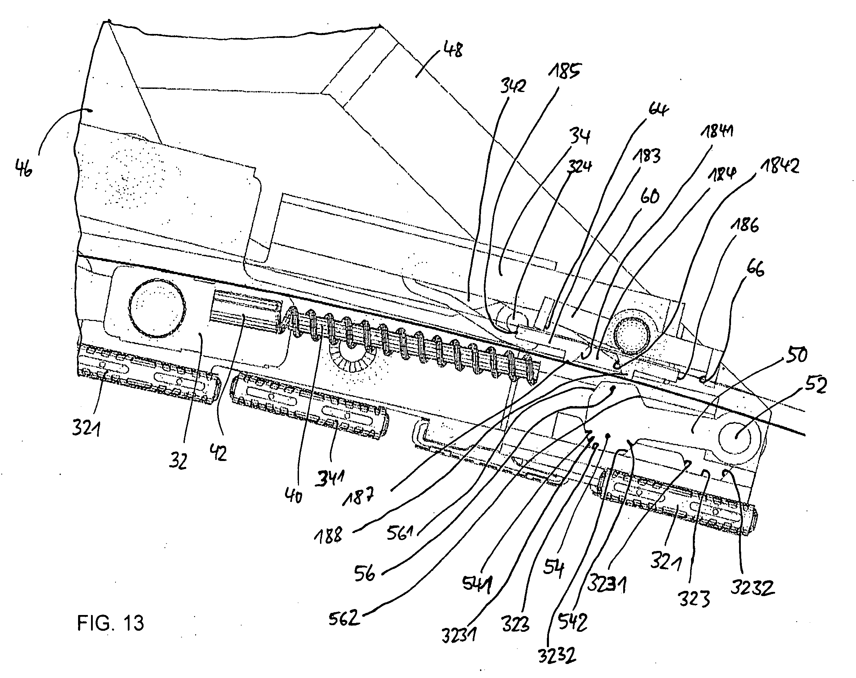

Sobald der Steuerbolzen 324 das hintere Ende der Steuerkurve 68 erreicht hat, gerät die vordere Anschlagfläche 64 der Steuerwippe 60 außer Eingriff mit der vorderen Anschlagfläche 185 des Anschlagelements 183. Gleichzeitig übergreift das hintere Ende der Steuerwippe 60 mit der hinteren Anschlagfläche 66 die hintere Anschlagfläche 186 des Anschlagelements 183. Das Riegelelement 50 steht jetzt mit seinem unteren Riegelteil 54 über der vorderen Aufnahme 323. Durch das Zusammenwirken der hinteren Anlaufschräge 562 des oberen Riegelteils 56 mit der hinteren Anlaufschräge 1842 der Aufnahme 184 wird das Riegelteil 50 nach unten gedrückt, wobei das obere Riegelteil 56 außer Eingriff mit der Aufnahme 184 und das untere Riegelteil 54 in Eingriff mit der vorderen Aufnahme 323 gebracht wird. Der hintere Gleithöcker 188 drückt auf die Gleitfläche des oberen Riegelteils 56 und hält somit das untere Riegelteil 54 fest in Eingriff mit der vorderen Aufnahme 323 (Figuren 12 und 13). Damit ist die zweite Bewegungsphase, während der der Antriebsschlitten 32 eine Annäherung an den festgehaltenen Steuerschlitten 34 ausgeführt hat, beendet und die dritte Bewegungsphase, in der wiederum eine synchrone Bewegung der beiden nun aneinander angenäherten Schlitten 32 und 34 beim weiteren Verschieben nach hinten mittels des Antriebskabels 40 erfolgt.

In der zweiten Bewegungsphase verringert sich durch die Annäherung des Antriebsschlittens 32 an den Steuerschlitten 34 der Abstand der unteren Schwenkachse 462 des Antriebslenkers 46 zur unteren Schwenkachse 482 des Steuerlenkers 48. Dadurch verändert sich der Ausstellwinkel der Dachspitze 24 an einem beliebigen, durch die Position des Anschlagelements 183 definierten Punkt des Verschiebeweges in der zweiten Bewegungsphase. Der Ausstellwinkel der Dachspitze 24ist somit in der dritten Bewegungsphase ein anderer als in der ersten Bewegungsphase.

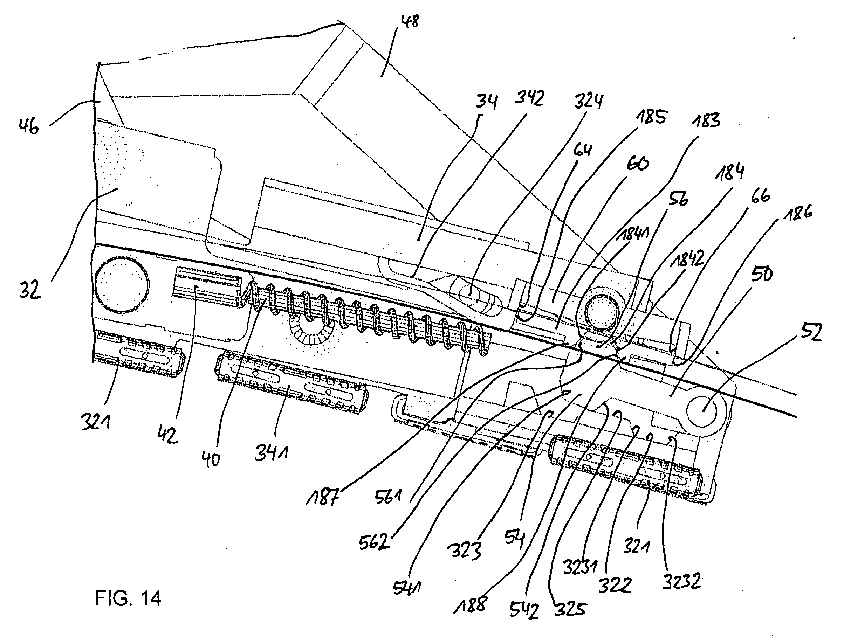

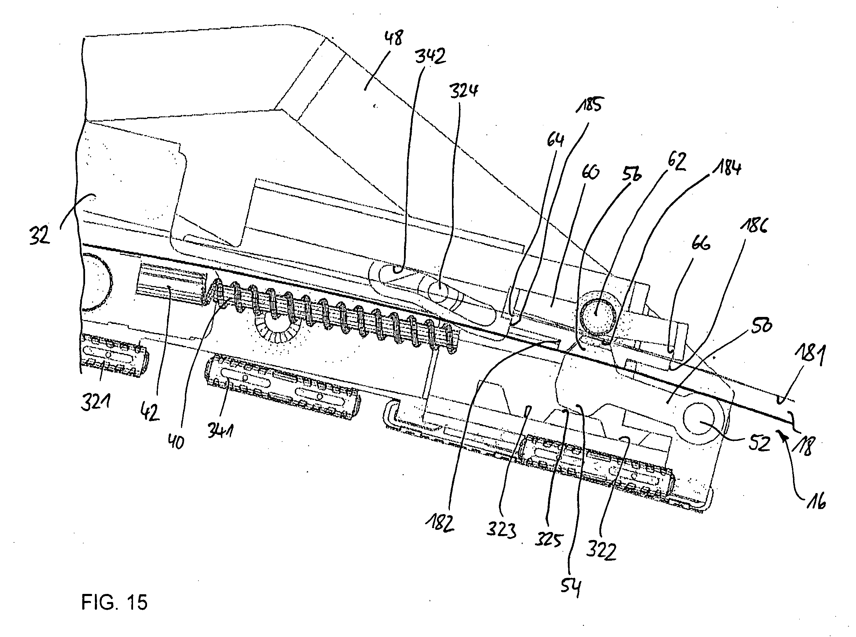

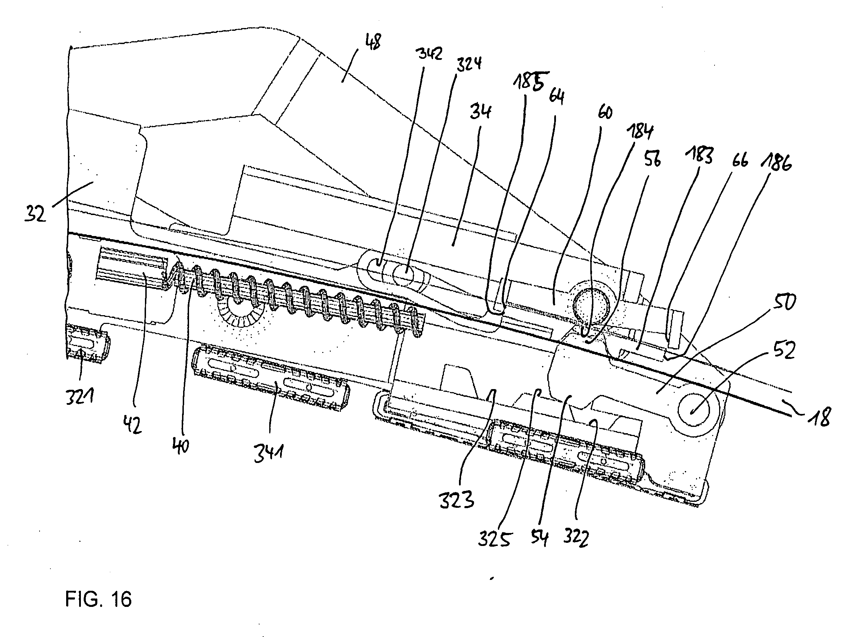

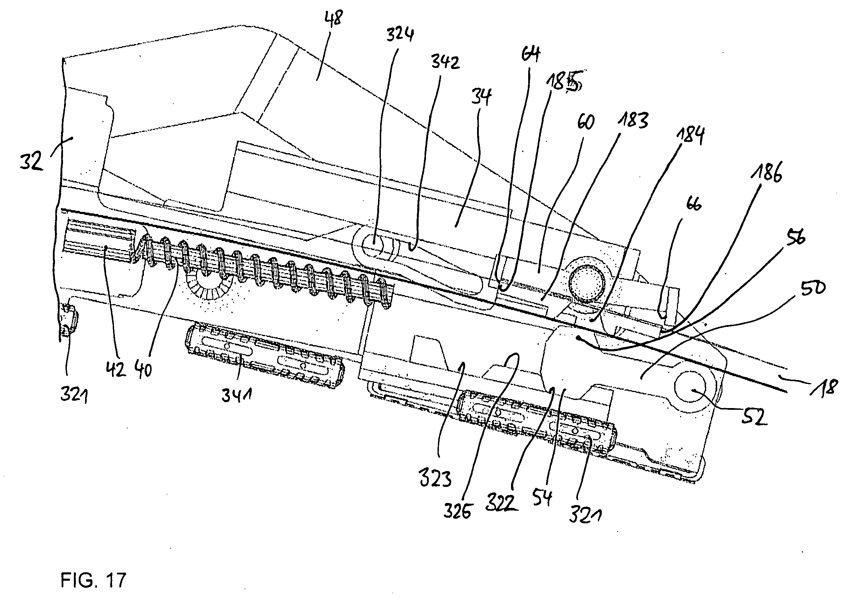

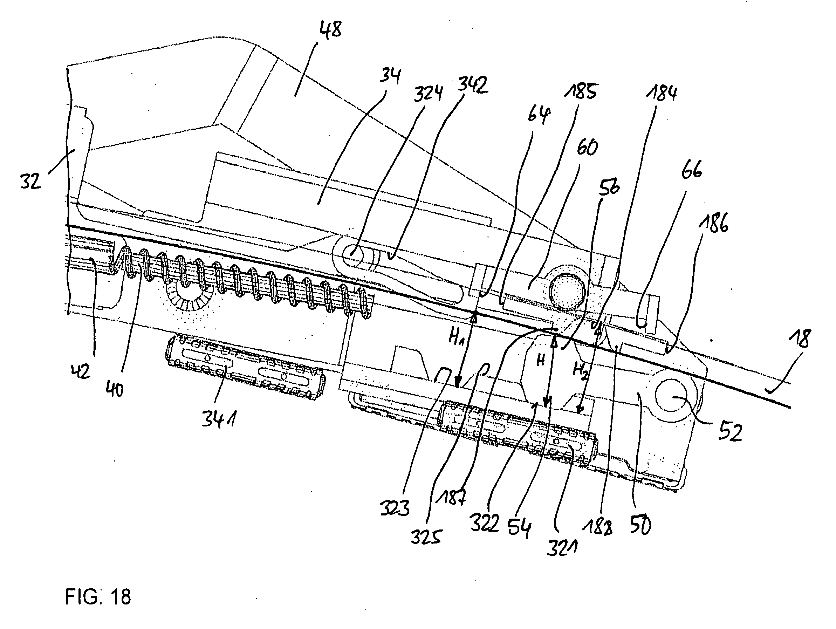

Die Bewegungsabläufe der Mechanik 30 beim Schließen des Faltverdecks 20 erfolgen in umgekehrter Reihenfolge wie vorstehend beschrieben. In den Figuren 13 bis 18 ist dieser umgekehrte Bewegungsablauf beim Schließen in vergrößerter Darstellung für das Riegelelement 50, die Steuerwippe 60 und die Aufnahmen 184, 322 und 323 gezeigt. Beim Schließen fährt beim Übergang der dritten Bewegungsphase zur zweiten Bewegungsphase (die Phasenbezeichnung ist analog der der Öffnungsbewegung gewählt) zunächst die hintere Anschlagfläche 66 der Steuerwippe 60 gegen die hintere Anschlagfläche 186 des Anschlagelements 183. Über die Steuerwippe 60 wird dadurch der Steuerschlitten 34 gegenüber der Führungsschiene 18 festgehalten (Figur 14). Durch das weitere Verschieben des Antriebsschlittens 32 nach vorn drückt die hintere Anlaufschräge 3232 der vorderen Aufnahme 323 gegen die hintere Anlaufschräge 542 des unteren Riegelteils 54 und hebt dadurch das Riegelelement 50 nach oben. Dabei gerät das untere Riegelteil 54 außer Eingriff mit der vorderen Aufnahme 323 und gleichzeitig das obere Riegelteil 56 in Eingriff mit der Aufnahme 184. dadurch ist der Steuerschlitten 34 wieder temporär mit der Führungsschiene 18 gekoppelt und der Antriebsschlitten 32 führt in der zweiten Bewegungsphase eine sich vom Steuerschlitten 34 nach vorn entfernende Relativbewegung durch. Dabei senkt der Steuerbolzen 324 beim Durchfahren der nun nach vorn ansteigenden Steuerkurve 68 die Steuerwippe 60 mit ihrem vor der Schwenkachse 62 gelegenen Teil nach unten ab, wobei die vordere Anschlagfläche 64 der Steuerwippe 60 die vordere Anschlagfläche 185 das Anschlagelements 183 übergreift (Figur 15). Sobald die hintere Aufnahme 322 in Überdeckung mit dem unteren Riegelteil 54 steht, gerät das obere Riegelteil 56 außer Eingriff mit der Aufnahme 184 und das untere Riegelteil 54 in Eingriff in der Aufnahme 322. Die zweite Bewegungsphase mit der Relativbewegung beider Schlitten 32, 34 ist damit beendet und bis zum vollständigen Schließen des Faltverdecks 20 führen die beiden Schlitten 32, 34 in der anschließenden ersten Bewegungsphase eine synchrone Bewegung nach vorne aus.

### Bezugszeichenliste

- 10: Fahrzeug
- 11: Fahrzeugdach
- 12: Windlauf
- 14: Dachholm
- 16: Führung
- 18: Führungsschiene
- 181: obere Führungsbahn
- 182: Aussparung
- 183: Anschlagelement
- 184: Aufnahme
- 1841: Anlaufschräge (vorn)
- 1842: Anlaufschräge (hinten)
- 185: Anschlagfläche (vorn)
- 186: Anschlagfläche (hinten)
- 187: Gleithöcker (vorne)
- 188: Gleithöcker (hinten)
- 20: Faltverdeck
- 22: Verdeckstoff
- 24: Dachspitze
- 26: Querspriegel
- 28: Zwischenspriegel
- 30: Mechanik (für 24)
- 32: Antriebsschlitten
- 321: Gleitelement
- 322: (hintere) Aufnahme (an 32)
- 3221: Anlaufschräge (vorn)
- 3222: Anlaufschräge (hinten)
- 323: (vordere) Aufnahme (an 32)
- 3231: Anlaufschräge (vorn)
- 3232: Anlaufschräge (hinten)
- 324: Steuerbolzen
- 325: Gleitfläche
- 34: Steuerschlitten
- 341: Gleitelement
- 36: Verriegelungshaken
- 38: Kniehebellenker
- 40: Antriebskabel
- 42: Kabelanbindung
- 44: Antrieb
- 46: Antriebslenker
- 461: Schwenkachse (von 46 an 24)
- 462: Schwenkachse (von 46 an 32)
- 48: Steuerlenker
- 481: Schwenkachse (von 48 an 24)
- 482: Schwenkachse (von 48 an 34)
- 483: Kröpfung
- 484: Hakenform
- 50: Riegelelement
- 52: Schwenkachse
- 54: (unteres) Riegelteil
- 541: Anlaufschräge (vorn)
- 542: Anlaufschräge (hinten)
- 56: (oberes) Riegelteil
- 561: Anlaufschräge (vorn)
- 562: Anlaufschräge (hinten)
- 60: Steuerwippe
- 62: Schwenkachse
- 64: Anschlagfläche (vorn)
- 66: Anschlagfläche (hinten)
- 68: Steuerkurve

## Patentansprüche

1. Öffnungsfähiges Fahrzeugdach (10) mit einem Dachteil (24),
- das mittels einer Lagereinrichtung (32; 34; 46, 48) an einer Führung (16) des Fahrzeugdaches (10) verschiebbar und verschwenkbar gelagert ist, und
- das mittels einer Antriebseinrichtung (40, 42) entlang der Führung (16) bewegbar ist,
- wobei die Lagereinrichtung zwei relativ zueinander bewegbare Schlitten (32, 34) aufweist,
- mit einer Steuereinrichtung (50; 322, 323; 183; 60; 17, 18), die auf einem Abschnitt des Bewegungswegs des Dachteils (24) in seine Ablagestellung die Lagereinrichtung (32; 34) derart steuert, dass das Dachteil (24) durch eine Schwenkbewegung seinen Neigungswinkel relativ zur Führung (16) verändert,
**dadurch gekennzeichnet, dass**
- die Steuereinrichtung (50; 322, 323; 183; 60; 17, 18)ein Riegelelement (50) aufweist, das schwenkbar an einem zweiten der beiden Schlitten (34) gelagert ist,
- das in bestimmten Bewegungsphasen des Dachteils (24) mit einem ersten Eingriffelement (56) mit einem Eingriffelement (184) an der Führung (16) in oder außer Eingriff bringbar ist, und
- das in anderen Bewegungsphasen des Dachteils (24) mit einem zweiten Eingriffelement (54) mit zwei unterschiedlichen Eingriffelementen (322, 323) am ersten der beiden Schlitten (32) in Eingriff bringbar ist.

2. Fahrzeugdach nach Anspruch 1,
**dadurch gekennzeichnet, dass** das Eingriffelement (184) für das erste Eingriffelement (56) des Riegelelements (50) an einem an der Führung (16) angeordneten Anschlagelement (183) ausgebildet ist.

3. Fahrzeugdach nach Anspruch 2,
**dadurch gekennzeichnet, dass** das Anschlagelement (183) in eine Aussparung an der Führung (16) einsetzbar ist.

4. Fahrzeugdach nach Anspruch 2 oder 3,
**dadurch gekennzeichnet, dass** das Eingriffelement von einer Aufnahme (184) gebildet wird, die eine zu einem trapezförmigen ersten Eingriffelement (56) des Riegelelements (50) komplementäre Form aufweist.

5. Fahrzeugdach nach einem der vorhergehenden Ansprüche,
**dadurch gekennzeichnet, dass** die zwei unterschiedlichen Eingriffelemente am ersten der beiden Schlitten (32) jeweils von einer Aufnahme (322 bzw. 323) gebildet werden, die eine zu einem trapezförmigen zweiten Eingriffelement (54) des Riegelelements (50) komplementäre Form aufweisen.

6. Fahrzeugdach nach einem der vorhergehenden Ansprüche,
**dadurch gekennzeichnet, dass** am zweiten der beiden Schlitten (34) eine Steuerwippe (60) schwenkbar angeordnet ist, die mit einer vorderen Anschlagfläche (64) und einer hinteren Anschlagfläche (66) eine vordere Anschlagfläche (185) beziehungsweise eine hintere Anschlagfläche (186) am Anschlagelement (183) in bestimmten Bewegungsphasen des Dachteils (24) übergreift.

7. Fahrzeugdach nach Anspruch 6,
**dadurch gekennzeichnet, dass** die Steuerwippe (60) mittels eines am ersten der beiden Schlitten (32) angeordneten Steuerbolzens (324) betätigbar ist, der mit einer Steuerkurve (68) an der Steuerwippe (60) in Eingriff steht.

8. Fahrzeugdach nach einem der vorhergehenden Ansprüche,
**dadurch gekennzeichnet, dass** die Lagereinrichtung (32; 34; 46, 48) einen ersten Hebel (46) und einen zweiten Hebel (48) in Viergelenkanordnung aufweist, wobei die führungsseitige Schwenkachse (462) des ersten Hebels (46) am ersten der beiden Schlitten (32) und die führungsseitige Schwenkachse (482) des zweiten Hebels (48) am zweiten der beiden Schlitten (34) angelenkt ist und wobei sich die Schlitten (32, 34) in einer bestimmten Bewegungsphase des Dachteils (24) durch eine Entkoppelung voneinander mittels des Riegelelements (50) bei gleichzeitiger Ankopplung eines Schlittens (34) an die Führung (16) relativ zueinander bewegen und dabei die beiden Hebel (46, 48) die Schwenkbewegung des Dachteils (24) gegenüber der Führung (16) bewirken, während in wenigstens einer anderen Bewegungsphase die beiden Schlitten (32, 34), gekoppelt durch das Riegelelement (50), eine synchrone Bewegung ausführen.

9. Fahrzeugdach nach einem Anspruch 8,
**dadurch gekennzeichnet, dass** eine synchrone Bewegung der beiden Schlitten (32, 34) vor und nach der Schwenkbewegung des Dachteils (24) erfolgt.

10. Fahrzeugdach nach einem der Ansprüche 8 oder 9,
**dadurch gekennzeichnet, dass** der erste Hebel als vorderer Hebel (46) am ersten Schlitten (32) gelagert ist, der als Antriebsschlitten ausgebildet und mit der Antriebseinrichtung (40, 42) verbunden ist.

11. Fahrzeugdach nach einem der vorhergehenden Ansprüche,
**dadurch gekennzeichnet, dass** die Antriebseinrichtung zum Verschieben des Dachteils (24) ein drucksteifes Antriebskabel (40) aufweist, das direkt oder indirekt auf einen Verschlusshaken (36) wirkt, der bei geschlossenem Fahrzeugdach das Dachteil (24) verriegelt hält und mit einem vorderen Hebel (46) der Lagereinrichtung (32; 34; 46, 48) schwenkbar gekoppelt ist.

12. Fahrzeugdach nach einem der vorhergehenden Ansprüche,
**dadurch gekennzeichnet, dass** das Dachteil (24) ein Frontspriegel oder eine Dachspitze eines Faltverdecks (20) ist.

13. Fahrzeugdach nach einem der Ansprüche 1 bis 12,
**dadurch gekennzeichnet, dass** die dachseitige Führung (16) an festen oder an bewegbaren oder an entnehmbaren Dachholmen (14) des Fahrzeugs angeordnet ist.

14. Fahrzeugdach nach einem der vorhergehenden Ansprüche,
**dadurch gekennzeichnet, dass** das Dach ein verstellbares Faltverdeck (20) eines Cabriolets oder eines Fahrzeugs mit festen oder bewegbaren bzw. entnehmbaren seitlichen Dachholmen (3) ist.

## Claims

1. Openable vehicle roof (10) with a roof part (24)
- which is mounted displaceably and pivotably on a guide (16) of the vehicle roof (10) by means of a bearing device (32; 34; 46, 48), and
- which is movable along the guide (16) by means of a driving device (40, 42),
- wherein the bearing device has two carriages (32, 34) which are movable relative to each other,
- with a control device (50; 322, 323; 183; 60; 17, 18) which controls the bearing device (32; 34) over a portion of the movement travel of the roof part (24) into the storage position thereof in such a manner that the roof part (24) changes the angle of inclination thereof relative to the guide (16) by means of a pivoting movement,
**characterized in that**
- the control device (50; 322, 323; 183; 60; 17, 18) has a bolt element (50) which is mounted pivotably on a second of the two carriages (34),
- certain movement phases of the roof part (24) can be brought, by means of a first engagement element (56), into or out of engagement with an engagement element (184) on the guide (16), and
- other movement phases of the roof part (24), can be brought, by means of a second engagement element (54), into engagement with two different engagement elements (322, 323) on the first of the two carriages (32).

2. Vehicle roof according to Claim 1, **characterized in that** the engagement element (184) for the first engagement element (56) of the bolt element (50) is formed on a stop element (183) arranged on the guide (16).

3. Vehicle roof according to Claim 2, **characterized in that** the stop element (183) is insertable into a cutout on the guide (16).

4. Vehicle roof according to Claim 2 or 3, **characterized in that** the engagement element is formed by a receptacle (184) which has a complementary shape to a trapezoidal first engagement element (56) of the bolt element (50).

5. Vehicle roof according to one of the preceding claims, **characterized in that** the two different engagement elements on the first of the two carriages (32) are formed by respective receptacles (322 and 323) which have a complementary shape to a trapezoidal second engagement element (54) of the bolt element (50).

6. Vehicle roof according to one of the preceding claims, **characterized in that** a control rocker (60) is arranged pivotably on the second of the two carriages (34) and, by means of a front stop surface (64) and a rear stop surface (66), respectively engages over a front stop surface (185) and a rear stop surface (186) on the stop element (183) in certain movement phases of the roof part (24).

7. Vehicle roof according to Claim 6, **characterized in that** the control rocker (60) is actuable by means of a control pin (324) which is arranged on the first of the two carriages (32) and is in engagement with a radial cam (68) on the control rocker (60).

8. Vehicle roof according to one of the preceding claims, **characterized in that** the bearing device (32; 34; 46, 48) has a first lever (46) and a second lever (48) in a four-bar linkage arrangement, the guide-side pivot spindle (462) of the first lever (46) being coupled to the first of the two carriages (32) and the guide-side pivot spindle (482) of the second lever (48) being coupled to the second of the two carriages (34), and the carriages (32, 34) moving relative to each other in a certain movement phase of the roof part (24) by being decoupled from each other by means of the bolt element (50) while one carriage (34) is simultaneously coupled to the guide (16) and, in the process, the two levers (46, 48) bringing about the pivoting movement of the roof part (24) in relation to the guide (16) while, in at least one other movement phase, the two carriages (32, 34), coupled by the bolt element (50), execute a synchronous movement.

9. Vehicle roof according to Claim 8, **characterized in that** a synchronous movement of the two carriages (32, 34) takes place before and after the pivoting movement of the roof part (24).

10. Vehicle roof according to either of Claims 8 and 9, **characterized in that** the first lever is mounted as a front lever (46) on the first carriage (32) which is designed as a driving carriage and is connected to the driving device (40, 42).

11. Vehicle roof according to one of the preceding claims, **characterized in that**, for displacement of the roof part (24), the driving device has a compression-resistant driving cable (40) which acts directly or indirectly on a closure hook (36) which, when the vehicle roof is closed, keeps the roof part (24) locked and is coupled pivotably to a front lever (46) of the bearing device (32; 34; 46, 48).

12. Vehicle roof according to one of the preceding claims, **characterized in that** the roof part (24) is a front bow or a roof tip of a folding top (20).

13. Vehicle roof according to one of Claims 1 to 12, **characterized in that** the roof-side guide (16) is arranged on fixed or on movable or on removable roof pillars (14) of the vehicle.

14. Vehicle roof according to one of the preceding claims, **characterized in that** the roof is an adjustable folding top (20) of a cabriolet or of a vehicle with fixed or movable or removable lateral roof pillars (3).

## Revendications

1. Toit de véhicule ouvrant (10) doté d'un élément de toit (24) ;
- qui peut coulisser et pivoter à l'aide d'un dispositif de palier (32 ; 34 ; 46, 48) au niveau d'un guide (16) du toit de véhicule (10) ; et
- qui peut être déplacé à l'aide d'un dispositif d'entraînement (40, 42) le long du guide (16) ;
- le dispositif de palier comportant deux chariots (32, 34) pouvant être déplacés l'un par rapport à l'autre ;
- avec un dispositif de commande (50 ; 322, 323 ; 183 ; 60 ; 17, 18) qui commande le dispositif de palier (32 ; 34) sur un segment de la trajectoire de l'élément de toit (24) dans sa position rangée de telle sorte que l'élément de toit (24) modifie, grâce à un mouvement de pivotement, son angle d'inclinaison par rapport au guide (16) ;
**caractérisé en ce que** :
- le dispositif de commande (50 ; 322, 323 ; 183 ; 60 ; 17, 18) comporte un élément de verrou (50) disposé de façon pivotante au niveau du deuxième des deux chariots (34) ;
- ledit élément pouvant être amené, dans des phases de mouvement définies de l'élément de toit (24), en prise ou hors prise avec un premier élément d'engrenage (56), avec un élément d'engrenage (184) prévu au niveau du guide (16) ; et
- ledit élément pouvant être amené, dans d'autres phases de mouvement de l'élément de toit (24), en prise avec un deuxième élément d'engrenage (54), avec deux éléments d'engrenage (322, 323) différents prévus au niveau du premier des deux chariots (32).

2. Toit de véhicule selon la revendication 1, **caractérisé en ce que** l'élément d'engrenage (184) prévu pour le premier élément d'engrenage (56) de l'élément de verrou (50) est réalisé au niveau d'un élément de butée (183) disposé au niveau du guide (16).

3. Toit de véhicule selon la revendication 2, **caractérisé en ce que** l'élément de butée (183) peut être inséré dans un évidement prévu au niveau du guide (16).

4. Toit de véhicule selon la revendication 2 ou 3, **caractérisé en ce que** l'élément d'engrenage est formé par un logement (184) qui comporte un premier élément d'engrenage (56) trapézoïdal présentant une forme complémentaire à celle de l'élément de verrou (50).

5. Toit de véhicule selon l'une quelconque des revendications précédentes, **caractérisé en ce que** les deux éléments d'engrenage différents sont formés au niveau du premier des deux chariots (32), respectivement, par un logement (322 et/ou 323), lesdits chariots comportant une forme complémentaire à celle d'un deuxième élément d'engrenage (54) trapézoïdal de l'élément de verrou (50).

6. Toit de véhicule selon l'une quelconque des revendications précédentes, **caractérisé en ce qu'**une bascule de commande (60) est disposée de façon pivotante au niveau du deuxième des deux chariots (34), ladite bascule engrenant avec une surface de butée avant (64) et une surface de butée arrière (66) une surface de butée avant (185) et/ou une surface de butée arrière (186) au niveau de l'élément de butée (183) dans des phases de mouvement définies de l'élément de toit (24) .

7. Toit de véhicule selon la revendication 6, **caractérisé en ce que** la bascule de commande (60) peut être actionnée à l'aide d'un boulon de commande (324) disposé au niveau du premier des deux chariots (32) et est en prise avec une courbe de commande (68) prévue au niveau de la bascule de commande (60).

8. Toit de véhicule selon l'une quelconque des revendications précédentes, **caractérisé en ce que** le dispositif de palier (32 ; 34 ; 46, 48) comporte un premier levier (46) et un deuxième levier (48) disposés en quadrilatère, l'axe de pivotement (462) côté guide du premier levier (46) étant articulé au niveau du premier des deux chariots (32) et l'axe de pivotement (482) côté guide du deuxième levier (48) étant articulé au niveau du deuxième des deux chariots (34) et les chariots (32, 34) se déplaçant l'un par rapport à l'autre dans une phase de mouvement définie de l'élément de toit (24) par un découplage à l'aide de l'élément de verrou (50) en présence d'un couplage simultané d'un chariot (34) au niveau du guide (16) et les deux leviers (46, 48) actionnant le mouvement de pivotement de l'élément de toit (24) par rapport au guide (16), tandis que dans au moins une autre phase de mouvement, les deux chariots (32, 34) couplés par l'élément de verrou (50) réalisent un mouvement synchrone.

9. Toit de véhicule selon la revendication 8, **caractérisé en ce qu'**un mouvement synchrone des deux chariots (32, 34) se produit avant et après le mouvement de pivotement de l'élément de toit (24).

10. Toit de véhicule selon l'une quelconque des revendications 8 ou 9, **caractérisé en ce que** le premier levier est disposé sous la forme d'un levier avant (46) au niveau du premier chariot (32), réalisé sous la forme d'un chariot d'entraînement et relié au dispositif d'entraînement (40, 42).

11. Toit de véhicule selon l'une quelconque des revendications précédentes, **caractérisé en ce que** le dispositif d'entraînement comporte un câble d'entraînement (40) rigide à la pression pour déplacer l'élément de toit (24), ledit câble agissant directement ou indirectement sur un crochet de fermeture (36) maintenant verrouillé l'élément de toit (24) lorsque le toit de véhicule est fermé et étant couplé de façon pivotante à un levier avant (46) du dispositif de palier (32 ; 34 ; 46, 48).

12. Toit de véhicule selon l'une quelconque des revendications précédentes, **caractérisé en ce que** l'élément de toit (24) est un arceau avant ou une pointe de toit de capote (20).

13. Toit de véhicule selon l'une quelconque des revendications 1 à 12, **caractérisé en ce que** le guide (16) côté toit est disposé au niveau de traverses de toit (14) fixes ou mobiles ou amovibles du véhicule.

14. Toit de véhicule selon l'une quelconque des revendications précédentes, **caractérisé en ce que** le toit est une capote (20) réglable d'un cabriolet ou d'un véhicule avec des traverses de toit (3) latérales fixes ou mobiles et/ou amovibles.
